# FASCICULE DE BREVET EUROPEEN

(11) **EP 0 613 621 B1**
(45) Date de publication et mention de la délivrance du brevet: **28.10.1998**
(21) Numéro de dépôt: 94400410.0
(22) Date de dépôt: 25.02.1994
(51) Int. Cl.: A23L 1/025, C11B 9/02

(54) **Procédé pour éliminer d'un extrait naturel au moins un composé organique génant**
Verfahren zum Entfernen zumindest eines unerwünschten organischen Produktes aus einem natürlichen Extrakt
Process for removing at least one unwanted organic compound from a natural extract

(30) Priorité: 01.03.1993 FR 9302313
(43) Date de publication de la demande: 07.09.1994
(73) Titulaire: COMMISSARIAT A L'ENERGIE ATOMIQUE, 75015 Paris Cédex 15 (FR)
(72) Inventeur: Moulin, C., F-91140 Villebon/Yvette (FR); Petit, A., F-75015 Paris (FR); Faugeras, Pierre, F-30130 Pont-Saint-Esprit (FR); Baccou, Jean-Claude, F-34080 Montpellier (FR); Jouy, Nicolas, F-34990 Juvignac (FR); Bessiere, J.M., F-34075 Montpellier Cedex (FR); Provost, I., F-34075 Montpellier Cedex (FR); Fontaine, H., F-94260 Fresnes (FR)
(74) Mandataire: Des Termes, Monique

(56) Documents cités:
- FR-A- 2 590 589
- JP-A-62 258 325
- SU-A- 1 738 206
- US-A- 4 996 069

## Description

La présente invention a pour objet un procédé pour éliminer d'un extrait naturel au moins un composé organique gênant.

Certains extraits naturels obtenus à partir des plantes présentent des propriétés intéressantes pour diverses applications, par exemple en pharmacie, en parfumerie, en cosmétique, en diététique ou en alimentation, mais ces extraits contiennent parfois des produits indésirables ou toxiques qu'il est nécessaire d'éliminer.

On peut effectuer cette élimination par les techniques connues de séparation par distillation ou par chromatographie. Toutefois, les techniques de distillation sont difficiles à mettre en oeuvre sur des mélanges très complexes comportant des produits instables, ayant des températures d'ébullition proches. Les techniques de chromatographie sont largement répandues dans les laboratoires d'analyse et de production, mais elles deviennent de plus en plus complexes, notamment en ce qui concerne le choix des phases et des solvants lorsque les produits à séparer sont proches en conformation. De plus, des pertes de produit sont à prévoir, ce qui peut être gênant dans le cas de produits à haute valeur ajoutée.

Une autre possibilité d'élimination de ces produits indésirables est d'utiliser des sources photoniques pour les détruire "in situ" dans un mélange, dans le cas où ces produits possèdent une bande d'absorption propre. Les sources lumineuses utilisables dans l'ultraviolet et le visible, comme les lampes à deutérium ou à xénon, possèdent toutefois une forte divergence et une bande passante (en longueur d'onde) trop large pour obtenir la sélectivité voulue dans le cas d'un mélange complexe. L'utilisation de filtre pour obtenir une bande passante plus étroite ne convient pas car elle conduit à une perte d'énergie trop importante pour détruire les produits à éliminer.

Le document FR-A-2 590 589 décrit l'emploi de sources lumineuses telles que des lasers, le soleil et des sources de photons classiques, pour transformer les acides alpha en acides iso-alpha dans des extraits de houblon, afin d'améliorer le pouvoir amérisant du houblon.

L'utilisation de lasers pour transformer certains produits est décrite dans les documents suivants : Database WPI, Week 8750, Derwent Publ. Ltd., London AN = 87-353 302 (JP-A-62 258 325) et Database WPI, Week 9320, Derwent Publ. Ltd, London, An = 93 166 033 (Su-A- 1 738 206).

Dans JP-A-62 258 325, le produit traité est un composé de kinine dont on diminue l'activité physiologique par irradiation laser.

Dans SU-A-1 738 206, le produit traité est un produit alimentaire ou un fourrage, et on utilise le pouvoir thermique d'un laser pour améliorer la qualité de ce produit

La présente invention a précisément pour objet un procédé pour éliminer d'un extrait au moins un composé organique gênant au moyen d'une source photonique constituée par un laser.

Selon l'invention, le procédé pour éliminer d'un extrait naturel au moins un composé organique gênant, consiste à soumettre l'extrait à une irradiation au moyen d'un faisceau laser dont la longueur d'onde correspond à une bande d'absorption du (des) composé(s) gênant(s) pour transformer ce(s) composé(s) en composé(s) non gênant(s) et/ou facilement séparable(s) de l'extrait.

De préférence, on utilise un laser pulsé.

Dans ce procédé, l'utilisation d'un laser permet d'obtenir, dans le cas de mélanges complexes, une bonne sélectivité et une cinétique de destruction rapide du ou ces composés gênants.

En effet, de par ses propriétés de cohérence spatiale et temporelle, le laser permet d'assurer une faible divergence et une émission caractérisée par une bande spectrale étroite, accordable de l'ultraviolet à l'infrarouge, en passant par le visible, avec des puissances élevées atteignant plusieurs MW/cm².

De la sorte, en choisissant un laser ayant la longueur d'onde voulue correspondant à une bande d'absorption isolée du ou des composés gênants, on peut obtenir par photolyse leur transformation en composé(s) non gênant(s) et/ou en composé(s) facile(s) à séparer de l'extrait. Aussi, on peut séparer ensuite le(s) composé(s) obtenu(s) par irradiation du(des) composés gênants par des techniques simples telles que l'évaporation.

Les composés gênants que l'on peut éliminer par ce procédé, sont donc des composés organiques susceptibles de subir des transformations chimiques irréversibles par absorption d'un rayonnement approprié. Ces transformations peuvent consister en une isomérisation ou en une décomposition en plusieurs molécules.

A titre d'exemples de composés présentant ces propriétés, on peut citer les composés carbonylés tels que les cétones, qui sont des composés capables de perdre leur groupe C=0 en donnant des hydrocarbures.

Un exemple de composé carbonylé gênant, est celui de la thujone car c'est un composé neurotoxique que l'on trouve notamment à des taux importants sous les formes cis et trans dans les extraits hexaniques de sauge (Salvia officinalis L) qui possèdent par ailleurs des propriétés anti-oxydantes intéressantes.

La photolyse de ces thujones cis et trans donne quantitativement des hydrocarbures selon le schéma réactionnel suivant :

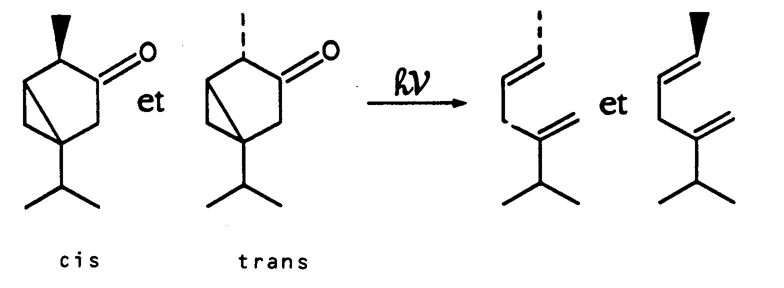

Cette réaction de photolyse est intéressante car les hydrocarbures insaturés produits ne sont pas des composés gênants ; de plus, ils peuvent être séparés aisément de l'extrait par évaporation.

L'extrait de sauge contient par ailleurs du camphre sans intérêt spécial, et qui n'est pas gênant; ce composé possède le même spectre d'absorption que la thujone. Aussi, le camphre sera transformé lui aussi par photolyse en hydrocarbure conformément au schéma réactionnel suivant :

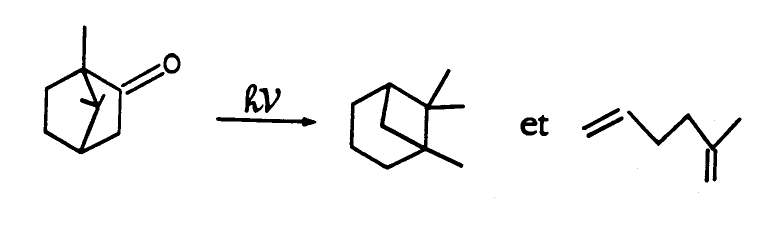

Un autre exemple de composés organiques susceptibles d'être traités par le procédé de l'invention est celui des phycobilisomes.

Les phycobilisomes sont des agrégats de phycobiliprotéines qui peuvent se décomposer en trois classes : les phycoérythrines (84%), les phycocyanines (11%) et les allophycocyanines (5%). Ils peuvent être utilisés comme marqueurs fluorescents en immunologie où ils permettent la mise en évidence d'un marqueur antigénique dans une préparation cellulaire ou une coupe histologique par l'association d'un anticorps spécifique. Les phycobilisomes présentent de nombreux avantages (notamment par rapport à la fluorescéine habituellement utilisée) : forts coefficients d'absorption dans une large bande spectrale, rendement quantique élevé, fluorescence constante dans une large bande de pH, rendement de fluorescence plus élevé, forte solubilité dans l'eau, fluorescence dans la région rouge orangé (région d'interférence minimale avec les autres composés biologiques).

Cependant en raison de leur grande similitude chimique, la purification de ces phycobiliprotéines ainsi que leur séparation par des procédés classiques posent plusieurs problèmes : nécessité de nombreuses étapes de chromatographie, perte de produits lors de celle-ci et obtention de composés non parfaitement purs.

Aussi, le procédé de l'invention est très intéressant dans le cas de ces composés car il permet de les purifier efficacement en choisissant une longueur d'onde appropriée pour détruire sélectivement certains constituants de ces phycobilisomes.

Pour mettre en oeuvre le procédé de l'invention, on dissout ou on dilue généralement l'extrait dans un solvant approprié avant de soumettre celui-ci à l'irradiation par le faisceau laser.

En effet, la dissolution ou dilution de l'extrait dans un solvant permet d'ajuster la concentration de l'extrait à une concentration optimale pour l'opération d'irradiation. Il est aussi possible de travailler directement (sans dilution) sur l'extrait.

Les solvants utilisés peuvent être de différents types et ils sont choisis de façon à former une phase liquide homogène avec l'extrait dans les conditions d'irradiation. Ces solvants peuvent être des solvants polaires ou apolaires.

A titre d'exemples de solvants organiques utilisables, on peut citer les alcools et en particulier l'éthanol.

Lorsque les bandes d'absorption des différents constituants de l'extrait sont très proches, comme c'est le cas par exemple avec les phycobilisomes, on utilise un laser de longueur d'onde la plus appropriée correspondant à un flanc du pic d'absorption de l'élément gênant pour obtenir la meilleure sélectivité.

Pour augmenter encore cette sélectivité, on peut réaliser l'irradiation à une température inférieure à la température ambiante afin de mieux séparer les pics d'absorption des constituants du mélange.

Toutefois, on ne peut opérer à des températures inférieures à la température de solidification de l'extrait soumis à l'irradiation. Lorsque celui-ci est dissous ou dilué dans un solvant, on opère généralement à des températures supérieures de 5 à 10°C à la température de solidification du solvant.

Le procédé de l'invention est donc très intéressant car il ne nécessite pas l'adjonction de réactifs chimiques pour éliminer les composés organiques gênants et il permet d'assurer l'élimination complète de ces composés.

Pour suivre cette élimination, on peut utiliser des techniques d'analyse classique telles que la chromatographie pour qualifier et quantifier l'état du mélange.

Une manière plus simple de suivre cette élimination est d'effectuer une mesure en continu de l'énergie du faisceau laser, après irradiation de l'extrait. Dans ce but, on peut réaliser l'irradiation de l'extrait en mettant celui-ci en circulation dans une cuve d'irradiation traversée par le faisceau laser et contrôler l'élimination du(des) composé(s) gênant(s) en mesurant l'énergie du faisceau laser ayant traversé la cuve d'irradiation.

En effet, au début de l'irradiation, le faisceau laser est très absorbé par l'extrait qui contient le composé gênant. Au fur et à mesure de la destruction de ce composé, le faisceau est moins absorbé et son énergie, mesurée après la cuve d'irradiation, augmente. En fin d'opération, lorsque le composé gênant a été complètement éliminé de l'extrait, l'énergie du faisceau laser ayant traversé la cuve d'irradiation, est pratiquement identique à l'énergie du faisceau avant son entrée dans la cuve d'irradiation.

Les lasers utilisés pour mettre en oeuvre le procédé de l'invention sont choisis en fonction de la nature du composé à éliminer de façon à présenter une longueur d'onde correspondant à un pic d'absorption de ce composé.

On peut utiliser en particulier des lasers à excimères ou des lasers à colorant pompés par des lasers à excimères ou autres (dans les 2 cas, il s'agit de lasers pulsés).

Le procédé de l'invention peut être utilisé en particulier pour éliminer des éléments gênants par leur toxicité, leur instabilité ou leur odeur, dans des extraits naturels, dans des domaines très divers tels que la pharmacie, la cosmétique, la diététique et l'alimentation. Ce procédé est particulièrement intéressant dans le cas où la séparation physicochimique du composé gênant est difficile et/ou les constituants de l'extrait sont trop fragiles.

En parfumerie, on peut par exemple utiliser ce procédé pour éliminer d'un extrait d'arômes des produits ayant une odeur gênante et modifier ainsi la note olfactive de l'extrait.

Des exemples d'extraits naturels susceptibles d'être traités par le procédé de l'invention sont les extraits de sauge, l'huile de sassafras, l'extrait de tagètes, l'essence de bergamote, et les extraits d'algues ou de pigments, par exemple de phycobilisomes.

D'autres caractéristiques et avantages de l'invention apparaîtront mieux à la lecture de la description qui suit, donnée bien entendu à titre illustratif et non limitatif, en référence au dessin annexé sur lequel :
- la figure 1 représente de façon schématique une installation pour l'irradiation d'un extrait par un faisceau laser, conformément au procédé de l'invention,
- les figures 2 et 3 sont des chromatogrammes d'une solution de thujones, obtenus respectivement avant et après irradiation,
- les figures 4 et 5 sont des chromatogrammes d'extrait de sauge obtenus respectivement avant et après irradiation,
- la figure 6 représente les spectres d'absorption de l'extrait de sauge, avant irradiation et après irradiation à 308nm,
- la figure 7 illustre les formules de la phycoérythrine et de la phycocyanine,
- la figure 8 représente les spectres d'absorption des phycobilisomes, et
- la figure 9 représente les spectres d'absorption d'un mélange de phycocyanine et de phycoérythrine avant et après irradiation à 620nm.
- la figure 10 représente le chromatogramme en phase gazeuse avant irradiation, de l'extrait de bergamote
- la figure 11 représente le chromatogramme en phase gazeuse obtenu après irradiation de l'extrait de bergamote,
- les figures 12 et 13 représentent respectivement les chromatogrammes de la solution alcoolique d'extrait de bergamote, obtenus par couplage chromatographie en phase gazeuse/spectrométrie de masse, avant et après irradiation, et
- la figure 14 concerne le spectre de masse du bergaptène.

Dans les exemples 1 et 2 qui suivent, on met en oeuvre le procédé de l'invention pour éliminer les thujones en utilisant un laser pulsé à excimères XeCl (type Lambda Physics : EMG 102) ayant les caractéristiques suivantes :
- longueur d'onde : 308nm,
- énergie : 100mJ,
- durée de l'impulsation laser : 20ns, et
- fréquence du laser : 50Hz.

### Exemple 1 : Elimination des thujones en solution alcoolique.

Le spectre ultraviolet des thujones alpha et bêta a montré que la bande d'absorption caractéristique des carbonyles se situait vers 300nm, ce qui permet l'utilisation directe du laser à excimères XeCl émettant à 308nm.

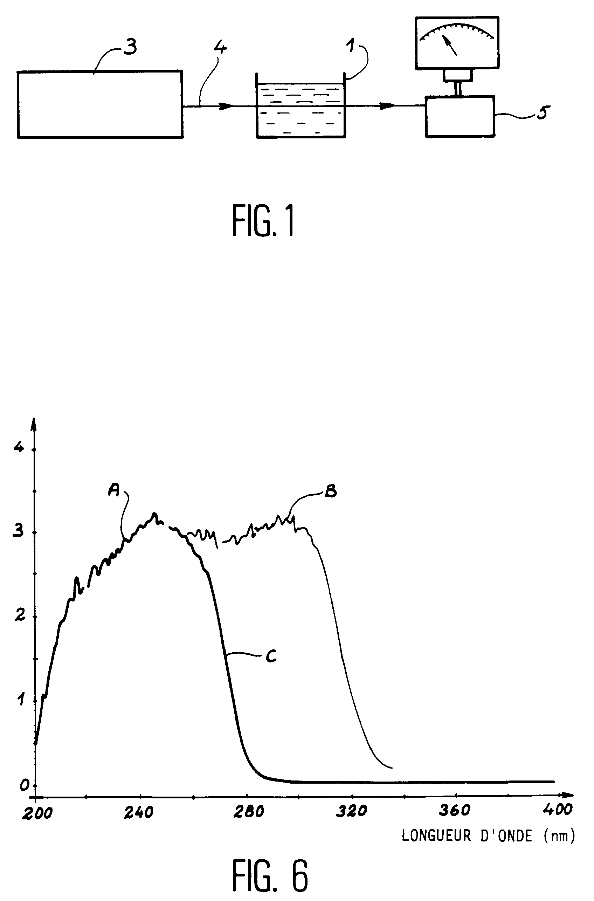

Pour vérifier la possibilité de détruire ces thujones par irradiation, on utilise l'installation représentée sur la figure 1.

Cette installation comprend une cuve d'irradiation (1) à circulation dans laquelle on introduit une solution des thujones dans l'éthanol, une source laser (3) émettant un faisceau laser (4) traversant la cuve (1) et un wattmètre (5) pour mesurer l'énergie du faisceau laser ayant traversé la cuve.

Dans cet exemple, le parcours optique du faisceau dans la cuve est de 1cm, et on utilise 2ml de solution éthanolique contenant 10% en vol. de thujones.

On irradie cette solution pendant 20min dans les conditions ambiantes, sans système réfrigérant, soit à une température de 30 à 40°C.

On analyse ensuite la solution par chromatographie en phase gazeuse sur une colonne DB1 (polydiméthylsilane) de 30m de longueur et de 0,25mm de diamètre, en utilisant comme gaz vecteur l'hydrogène, avec un programme en température de 50°C (isotherme pendant 2min), puis une augmentation de 4°C/min jusqu'à 280°C. Le mélange est injecté dans la colonne à une température de 240°C et le chromatogramme est obtenu avec un détecteur à ionisation de flamme à 250°C.

On effectue la même analyse sur la solution avant irradiation.

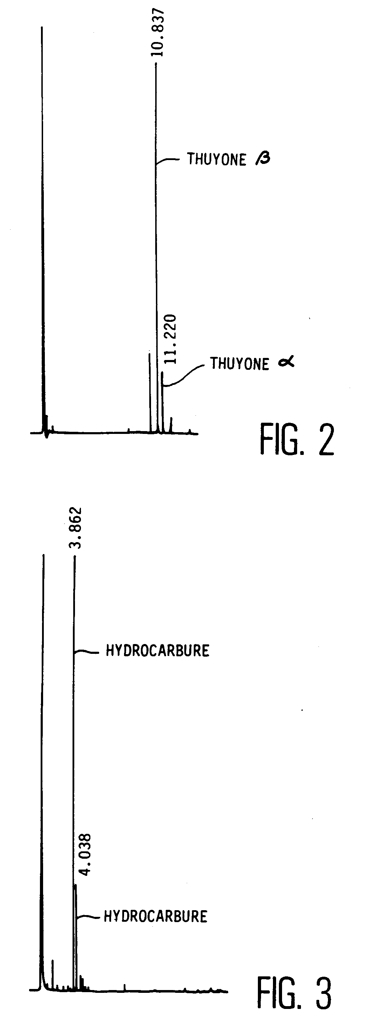

Sur la figure 2, on a représenté le chromatogramme obtenu avant irradiation où l'on remarque les deux pics correspondant respectivement à la thujone bêta (10.837) et à la thujone alpha (11.220).

Sur la figure 3, on a représenté le chromatogramme obtenu après irradiation de la solution. Sur ce chromatogramme, les pics correspondant aux thujones ont disparu. En revanche, on observe de nouveaux pics qui correspondent à l'apparition des hydrocarbures provenant de la dégradation des thujones dont les masses moléculaires sont de 124.

L'élimination des thujones est également confirmée par spectrométrie de masse.

### Exemple 2 : Elimination des thujones et du camphre dans un extrait de sauge.

On dilue l'extrait de sauge dans de l'éthanol pour obtenir une solution à 10% d'extrait de sauge et on soumet 2ml de cette solution à une irradiation en utilisant le même laser et les mêmes conditions que celles de l'exemple 1. On transforme ainsi toutes les thujones présentes dans l'extrait en hydrocarbures et on détruit également le camphre présent dans l'échantillon.

On vérifie l'élimination des thujones et du camphre par chromatographie gazeuse comme dans l'exemple 1.

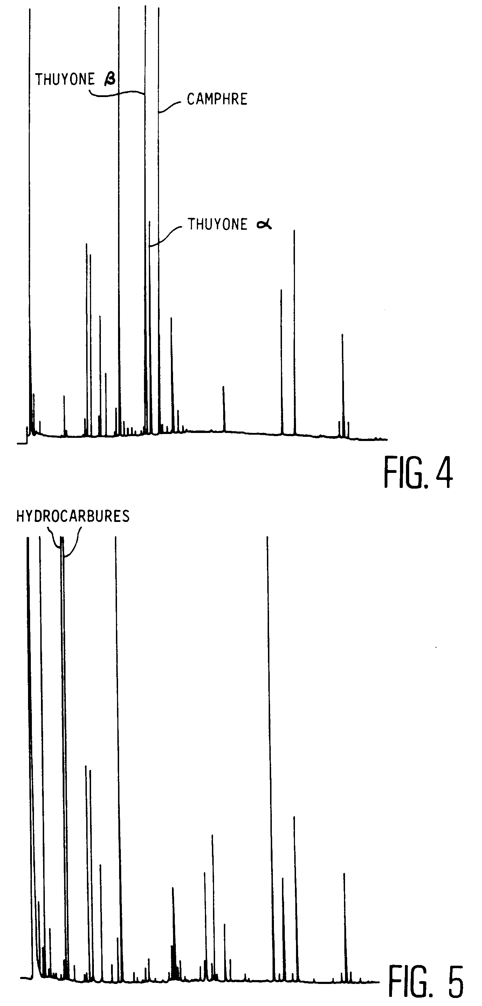

Sur la figure 4, on a représenté le chromatogramme de l'extrait alcoolique de sauge avant irradiation, et l'on remarque sur ce chromatogramme les pics correspondant aux thujones alpha, bêta et au camphre.

Sur la figure 5, on a représenté le chromatogramme de l'extrait de sauge après irradiation et l'on remarque que ce chromatogramme ne comporte plus les pics correspondant aux thujones et au camphre mais on observe des pics correspondant aux hydrocarbures ayant une masse moléculaire de 124 qui sont les produits de dégradation des thujones et du camphre.

Cette élimination des thujones et du camphre est également confirmée par spectrométrie de masse.

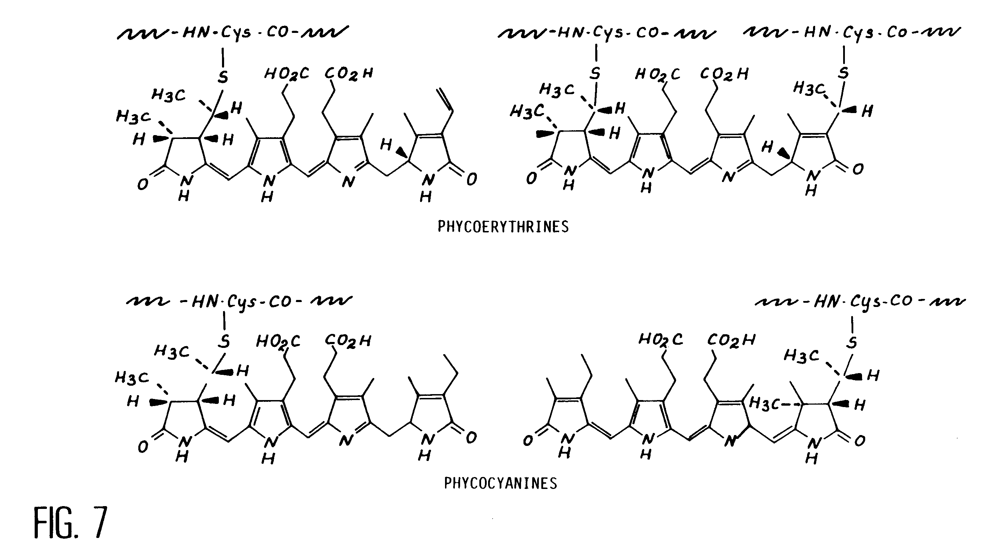

Sur la figure 6, on a représenté les spectres d'absorption de l'extrait de sauge, avant et après irradiation. Ces spectres ont été obtenus sur un spectrophotomètre Cary 1 en utilisant la même cuve que celle utilisée lors de l'irradiation laser.

Sur la figure 6, on remarque que le spectre d'absorption après irradiation (A+C) est plus restreint que le spectre d'absorption avant irradiation (A+B) et qu'il ne comporte plus d'absorption après 280nm, les thujones et le camphre ont donc bien été éliminés.

Après transformation des thujones et du camphre, on élimine tous les hydrocarbures légers issus de ces transformations par évaporation sous vide à 50°C sous 50kPa (0,5bar).

Ainsi, le procédé de l'invention qui comprend simplement les étapes successives de photolyse par faisceau laser et d'évaporation sous pression réduite, a permis de supprimer les thujones et le camphre de l'extrait de sauge sans aucun ajout de réactif en n'effectuant qu'une simple dilution dans l'alcool.

Les exemples 3 et 4 qui suivent illustrent l'utilisation du procédé de l'invention pour éliminer la phycoérythrine ou la phycocyanine en utilisant un laser pulsé à excimères XeCl (type Lambda Physics : EMG 102) qui pompe un laser à colorant (type Lambda Physics : FL 2002) ayant les caractéristiques suivantes :
- longueur d'onde : 620nm (Rhodamine 101, plage d'utilisation 620-700nm) ou 490nm (Coumarine 102, plage d'utilisation 460-520nm).
   - - énergie :: 20mj
   - - durée de l'impulsion laser :: 20ns, et
   - - fréquence du laser :: 120Hz.

La figure 7 illustre les formules des phycoérythrines et des phycocyanines qui sont généralement liées à des peptides par l'intermédiaire des atomes de soufre de résidus Cys, comme il est représenté sur cette figure.

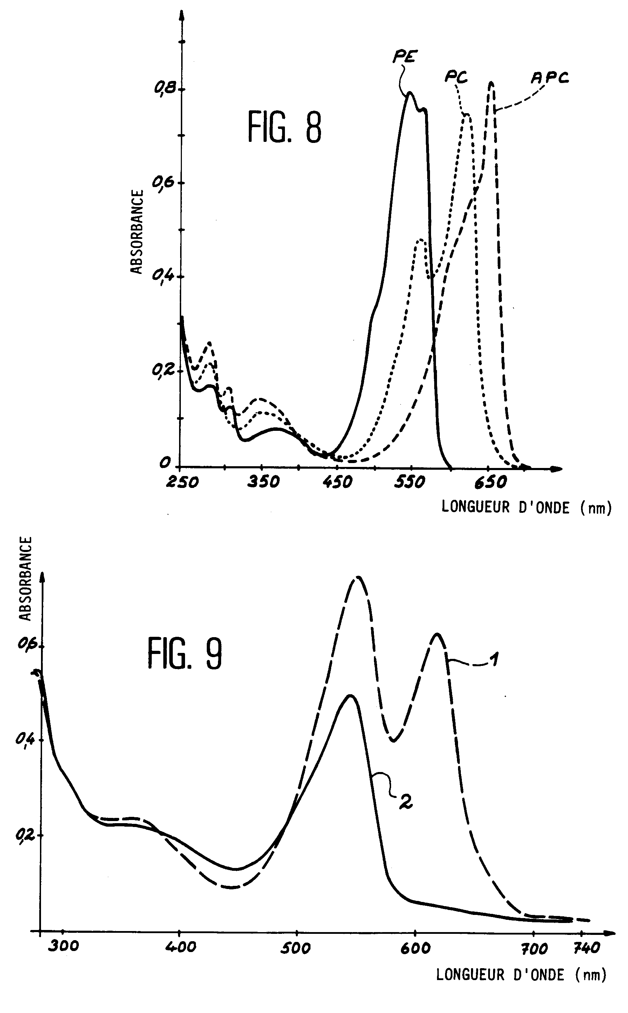

La figure 8 représente les spectres d'absorption de ces différents composés appartenant à la classe des phycobilisomes.

Sur cette figure, le spectre en trait plein se rapporte à la phycoérythrine (PE) et il présente deux maxima d'absorption vers 545 et 565nm. Le spectre en pointillés se rapporte à la phycocyanine (PC) et il présente deux maxima d'absorption vers 555 et 620nm.

Le spectre en traits mixtes se rapporte à l'allophycocyanine (APC) et il présente un maximum d'absorption vers 650nm.

Ainsi, par irradiation de ces composés à des longueurs d'onde appropriées correspondant à leurs bandes d'absorption, on peut les transformer en composés organiques de masse moléculaire plus faible.

### Exemple 3 : Destruction sélective de la phycoérythrine (PE) en présence de phycocyanine (PC).

Pour réaliser cette destruction, on utilise le laser à Coumarine 102 à 470nm, et on opère comme dans l'exemple 1 en utilisant une solution d'hydrogénophosphate contenant 20% en volume d'un mélange PE-PC.

Le choix de la longueur d'onde est complexe car l'irradiation à 545nm (maximum d'absorption de la PE) n'est pas sélective puisque la PC absorbe aussi fortement. Le choix de la longueur d'onde (470nm) s'explique donc par le fait que la PE présente un épaulement important à cette longueur d'onde tandis que la PC absorbe peu. Les différents essais d'irradiation (entre 470 et 500nm) ont montré qu'il n'était pas possible de détruire la PE sans toucher aussi à la PC, par contre il est possible de détruire 2 fois plus de PE que de PC en travaillant à cette longueur d'onde particulière.

Ce cas précis montre l'importance d'avoir des produits avec des spectres d'absorption bien distincts. Toutefois, il est aussi possible dans des cas complexes (interférences des spectres d'absorption) de pouvoir irradier sur un flanc du pic d'absorption pour obtenir une meilleure sélectivité. Cette réaction est irréversible.

### Exemple 4 : Destruction totale de la phycocyanine PC en présence de phycoérythrine PE.

Dans ce cas on réalise l'irradiation laser à 620nm avec le laser à Rhodamine 101 et on opère comme dans l'exemple 3.

Le choix de la longueur d'onde (620nm) s'explique par le fait que la PC seule, absorbe à 620nm. Les différents essais d'irradiation ont montré au bout d'une dizaine de minutes une destruction totale de la PC en présence de PE, qui elle n'est pas touchée par ce processus.

La figure 8 illustre les spectres d'absorption avant irradiation (courbe 1) et après irradiation (courbe 2).

Sur la courbe 2 on observe la disparition du pic de la PC à 620nm et la diminution du pic aux environs de 550nm qui correspond exactement à la contribution de la PC dans ce pic (rassemblant la PE et la PC). Cette réaction est irréversible.

### Exemple 5 : Elimination d'un composé gênant, le bergaptène, dans l'huile essentielle de bergamote, par irradiation laser.

Cette huile essentielle est largement employée en parfumerie, en particulier pour l'eau de Cologne. Cependant son utilisation soulève des difficultés en raison de la présence, dans cette huile, de bergaptène, molécule photosensibilisante. En effet, il est responsable de réactions phototoxiques (brunissement durable) suite à l'exposition de la peau, en contact avec de l'huile de Bergamote, au soleil ou aux radiations U.V. Aussi, la quantité de bergaptène présente dans les huiles essentielles en contenant est-elle sévèrement contrôlée.

### Absorption.

La longueur d'onde d'absorption maximale du bergaptène, en solution dans l'éthanol 96%, est de 311nm.

### Irradiation.

Cette longueur d'onde correspond pratiquement à la longueur d'onde d'émission du laser à excimères XeCl qui est de 308nm. L'utilisation directe de ce laser est donc possible.

On suit donc le même mode opératoire que dans l'exemple 1 pour irradier l'extrait de bergamote en utilisant ce laser à excimères XeCl.

Dans ce but, on dilue l'huile essentielle de bergamote dans de l'éthanol pour obtenir une solution à 10% d'huile essentielle et on soumet 2ml de cette solution à l'irradiation. Quelques minutes suffisent à faire disparaître la bande d'absorption à 311nm.

On vérifie l'élimination du bergaptène par l'analyse par chromatographie en phase gazeuse (CPG) et par couplage CPG/spectrométire de masse.

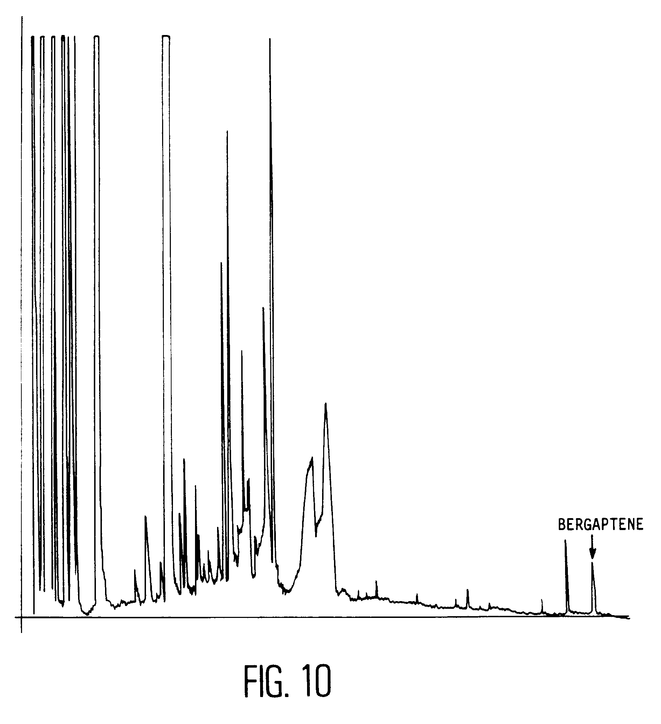

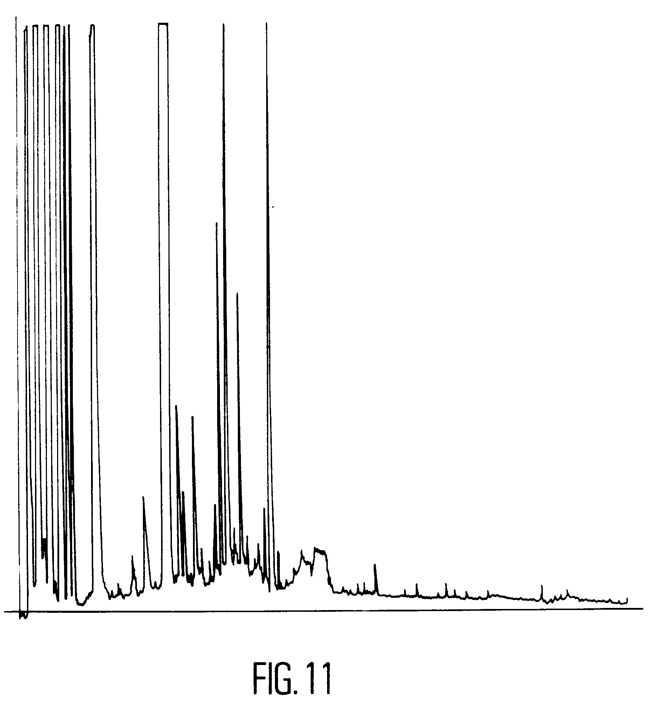

Les figures 10 et 11 représentent les chromatogrammes obtenus en phase gazeuse avant irradiation (fig. 10) et après irradiation (fig. 11).

Ces figures montrent clairement la disparition du pic caractéristique du bergaptène après irradiation, alors que le reste des constituants de l'huile n'est pratiquement pas modifié.

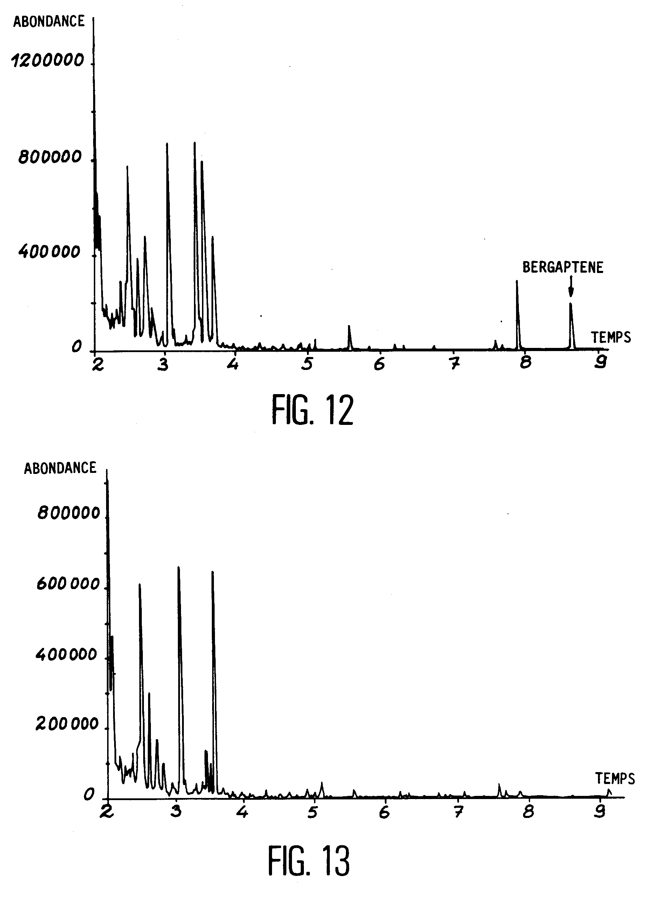

Les figures 12 et 13 illustrent les chromatogrammes obtenus par couplage CPG/spectrométrie de masse avant irradiation (fig. 12) et après irradiation (fig. 13).

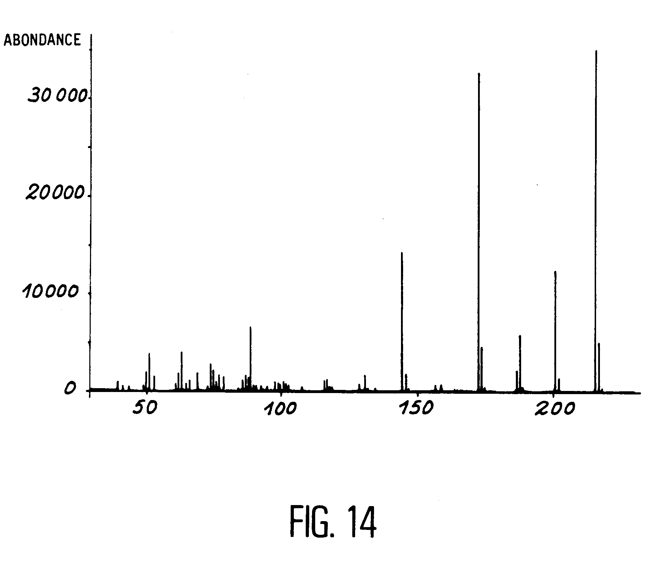

Ces figures confirment la disparition du pic caractéristique du bergaptène. Le spectre de masse correspondant au pic du bergaptène qui est illustré sur la figure 14 lève toute ambiguité quant à son identification.

Ainsi, le procédé de l'invention a bien permis d'éliminer, dans l'huile essentielle de bergamote, le composé gênant, le bergaptène.

## Revendications

1. Procédé pour éliminer d'un extrait naturel au moins un composé organique gênant, caractérisé en ce qu'il consiste à soumettre l'extrait à une irradiation au moyen d'un faisceau laser dont la longueur d'onde correspond à une bande d'absorption du(des) composé(s) gênant(s) pour transformer ce(s) composé(s) en composé(s) non gênant(s) et/ou facilement séparable(s) de l'extrait.

2. Procédé selon la revendication 1, caractérisé en ce que le composé gênant est une cétone.

3. Procédé selon la revendication 2, caractérisé en ce que le composé gênant est la thujone.

4. Procédé selon la revendication 3, caractérisé en ce que l'extrait est un extrait de sauge.

5. Procédé selon la revendication 1, caractérisé en ce que le composé gênant est une phycobiliprotéine.

6. Procédé selon la revendication 5, caractérisé en ce que le composé gênant est la phycocyanine ou la phycoérythricine.

7. Procédé selon la revendication 1, caractérisé en ce que l'extrait est un extrait de bergamote.

8. Procédé selon la revendication 7, caractérisé en ce que le composé gênant est le bergaptène.

9. Procédé selon l'une quelconque des revendications 1 à 8, caractérisé en ce que l'extrait est dissous ou dilué dans un solvant avant d'être soumis à l'irradiation par le faisceau laser.

10. Procédé selon l'une quelconque des revendications 1 à 9, caractérisé en ce que l'on réalise l'irradiation à une température inférieure à la température ambiante, mais supérieure à la température de solidification de l'extrait soumis à l'irradiation.

11. Procédé selon l'une quelconque des revendications 2 à 4, caractérisé en ce qu'il comprend une étape complémentaire de séparation du(des) composé(s) obtenu(s) par l'irradiation du(des) composé(s) gênant(s).

12. Procédé selon la revendication 11, caractérisé en ce que l'on réalise cette séparation par évaporation.

13. Procédé selon la revendication 1, caractérisé en ce que l'on réalise l'irradiation de l'extrait en le mettant en circulation dans une cuve d'irradiation traversée par le faisceau laser et en ce que l'on contrôle l'élimination du(des) composé(s) gênant(s) en mesurant l'énergie du faisceau laser ayant traversé la cuve d'irradiation.

14. Procédé selon l'une quelconque des revendications 1, 5 et 6, caractérisé en ce que l'irradiation est effectuée à une longueur d'onde correspondant au flanc du pic d'absorption de l'élément gênant pour obtenir la meilleure sélectivité de destruction.

15. Procédé selon l'une quelconque des revendications 1 à 14, caractérisé en ce que l'extrait est un extrait d'arômes et en ce que le traitement d'irradiation permet de modifier la note olfactive de l'extrait.

## Claims

1. Process for the elimination of at least one unwanted, organic compound from a natural extract, characterized in that it consists of subjecting the extract to an irradiation by means of a laser beam, whose wavelength corresponds to an absorption band of said unwanted compound or compounds in order to transfer the said compound or compounds into non-unwanted and/or easily extract-separable compound or compounds.

2. Process according to claim 1, characterized in that the unwanted compound is a ketone.

3. Process according to claim 2, characterized in that the unwanted compound is thujone.

4. Process according to claim 3, characterized in that the extract is a sage extract.

5. Process according to claim 1, characterized in that the unwanted compound is a phycobiliprotein.

6. Process according to claim 5, characterized in that the unwanted compound is phycocyanine or phycoerythricine.

7. Process according to claim 1, characterized in that the extract is a bergamot extract.

8. Process according to claim 7, characterized in that the unwanted compound is bergaptene.

9. Process according to any one of the claims 1 to 8, characterized in that the extract is dissolved or diluted in a solvent before being subject to laser beam irradiation.

10. Process according to any one of the claims 1 to 9, characterized in that irradiation is performed at a temperature below ambient temperature, but above the solidification temperature of the extract subject to irradiation.

11. Process according to any one of the claims 2 to 4, characterized in that it comprises a complimentary stage of separating the compound or compounds obtained by irradiating the unwanted compound or compounds.

12. Process according to claim 11, characterized in that said separation takes place by evaporation.

13. Process according to claim 1, characterized in that the extract is irradiated by circulating it in an irradiation container traversed by the laser beam and in that the elimination of the unwanted compound or compounds is controlled by measuring the energy of the laser beam which has traversed the irradiation container.

14. Process according to any one of the claims 1, 5 and 6, characterized in that irradiation takes place at a wavelength corresponding to the flank of the absorption peak of the unwanted element in order to obtain the best destruction selectivity.

15. Process according to any one of the claims 1 to 14, characterized in that the extract is an extract of aromas and that the irradiation treatment makes it possible to modify the olfactory rating of the extract.

## Patentansprüche

1. Verfahren zur Entfernung wenigstens einer störenden organischen Verbindung aus einem natürlichen Extrakt, dadurch gekennzeichnet, daß es darin besteht, den Extrakt einer Bestrahlung mit einem Laserbündel, dessen Wellenlänge einer Absorptionsbande der störenden Verbindung(en) entspricht, auszusetzen, um diese Verbindung(en) in eine (bzw. mehrere) nicht störende und/oder leicht von dem Extrakt abzutrennende Verbindung(en) umzuwandeln.

2. Verfahren nach Anspruch 1, dadurch gekennzeichnet, daß die störende Verbindung ein Keton ist.

3. Verfahren nach Anspruch 2, dadurch gekennzeichnet, daß die störende Verbindung Thujon ist.

4. Verfahren nach Anspruch 3, dadurch gekennzeichnet, daß der Extrakt ein Salbei-Extrakt ist.

5. Verfahren nach Anspruch 1, dadurch gekennzeichnet, daß die störende Verbindung ein Phycobiliprotein ist.

6. Verfahren nach Anspruch 5, dadurch gekennzeichnet, daß die störende Verbindung Phycocyanin oder Phycoerythrin ist.

7. Verfahren nach Anspruch 1, dadurch gekennzeichnet, daß der Extrakt ein Bergamotte-Extrakt ist.

8. Verfahren nach Anspruch 7, dadurch gekennzeichnet, daß die störende Verbindung Bergapten ist.

9. Verfahren nach einem der Ansprüche 1 bis 8, dadurch gekennzeichnet, daß der Extrakt in einem Lösungsmittel aufgelöst oder verdünnt wird, bevor er der Bestrahlung mit dem Laserbündel ausgesetzt wird.

10. Verfahren nach einem der Ansprüche 1 bis 9, dadurch gekennzeichnet, daß man die Bestrahlung bei einer Temperatur ausführt, die unter der Umgebungstemperatur, aber über der Erstarrungstemperatur des der Bestrahlung ausgesetzten Extrakts liegt.

11. Verfahren nach einem der Ansprüche 2 bis 4, dadurch gekennzeichnet, daß es einen ergänzenden Schritt der Abtrennung der durch die Bestrahlung der störenden Verbindung(en) erhaltenen Verbindung(en) umfaßt.

12. Verfahren nach Anspruch 11, dadurch gekennzeichnet, daß man diese Abtrennung durch Abdampfen ausführt.

13. Verfahren nach Anspruch 1, dadurch gekennzeichnet, daß man die Bestrahlung des Extrakts ausführt, indem man ihn in einer Bestrahlungszelle, die von dem Laserbündel durchquert wird, umwälzt, und daß man die Entfernung der störenden Verbindung(en) kontrolliert, indem man die Energie des Laserbündels, das die Bestrahlungszelle durchquert hat, mißt.

14. Verfahren nach einem der Ansprüche 1, 5 und 6, dadurch gekennzeichnet, daß die Bestrahlung bei einer Wellenlänge ausgeführt wird, die der Flanke des Absorptionspeaks der störenden Komponente entspricht, um die beste Selektivität der Zerstörung zu erhalten.

15. Verfahren nach einem der Ansprüche 1 bis 14, dadurch gekennzeichnet, daß der Extrakt ein Aromenextrakt ist und daß die Bestrahlungsbehandlung es erlaubt, die olfaktorische Note des Extrakts zu verändern.
